# EUROPEAN PATENT SPECIFICATION

(11) **EP 3 440 022 B1**
(45) Date of publication and mention of the grant of the patent: **13.05.2020**
(21) Application number: 17726156.7
(22) Date of filing: 15.03.2017
(51) Int. Cl.: C03B 9/48, C22C 9/06, C03B 11/00

(54) **COPPER ALLOY**
KUPFERLEGIERUNG
ALLIAGE DE CUIVRE

(30) Priority: 05.04.2016 IT UA20162305
(43) Date of publication of application: 13.02.2019
(73) Proprietor: Fonderie Bartalesi S.r.l., 53036 Poggibonsi (SI) (IT)
(72) Inventor: PETRI Fabio, 53036 Poggibonsi (SI) (IT)
(74) Representative: Mincone, Antimo
(86) International application number: PCT/IT2017/000053
(87) International publication number: WO 2017/175251

(56) References cited:
- EP-A1- 0 383 998
- EP-A1- 0 879 796
- US-A- 3 258 334
- US-A- 4 732 602

## Description

The present invention relates to the production of metal alloys for the manufacture of molds.

More particularly, the present invention relates to the production of copper alloys used in the manufacture of molds for glass containers such as, for example, bottles, vials, jars and pots.

It is known that glassware molds are produced with alloys containing a predominant proportion of copper. The weight percent composition of a known alloy for the manufacture of glassware molds (alloy known under the trade designation B02 or B204) is the following: Cu=65-67%, Ni=14-16%, Al=6-7.5%, Zn=7.5-9.5%, Fe=0.5-1%, Mn=0,3-0,4%, Sn<0.15%, Pb<0.15%, Si<0.15%. Patent literature US4732602A and EP0879796A1 also disclose copper alloys for said purpose.

A drawback associated with the use of known alloys lies in the relatively small die life compared to the current production requirements of the glass industry. Further drawbacks related to the relatively low abrasion resistance of the molds made with these alloys reside in the increase of the internal volume of the molds over time as a result of maintenance polishing, which corresponds to a progressive increase of the capacity of the containers produced with the same molds making them progressively no longer suitable for use.

The main purpose of the present invention is to provide an alloy, in particular for the manufacture of glassware molds, allowing an increase of the duration of the molds, i.e. the number of operating cycles, and, at the same time, to provide increased resistance to abrasion and increased resistance to penetration by oils used in the process of swabbing, as well as a higher production with greater dissipation of heat allowing even higher production speed.

This result is achieved, according to the present invention, by adopting the idea of making a metal alloy having the features indicated in claim 1. Other features of the invention are the subject of the dependent claims.

Thanks to the present invention, it is possible to obtain molds characterized by an increased surface hardness, which allows to prolong the time interval between consecutive polishing operations and at the same time reduces the absorption of the lubricant normally used to promote the forming of the glass and normally applied by swabbing, thanks to the fine grain size structure that is formed and that is substantially free of surface porosity.

These and other advantages and features of the present invention will be best understood by anyone skilled in the art thanks to the following description and to the attached drawings, provided by way of example but not by considersi in a limiting sense, in which:

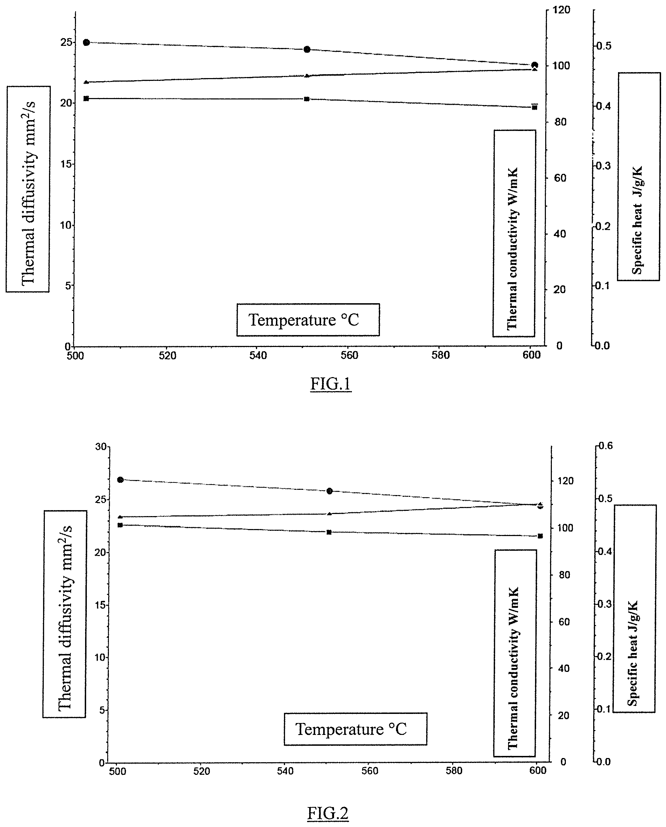

Fig.1 is a diagram of the thermophysical properties of a known alloy (B02 alloy cited in the introduction);
Fig.2 is a diagram of the thermophysical properties of an alloy in accordance with the present invention;

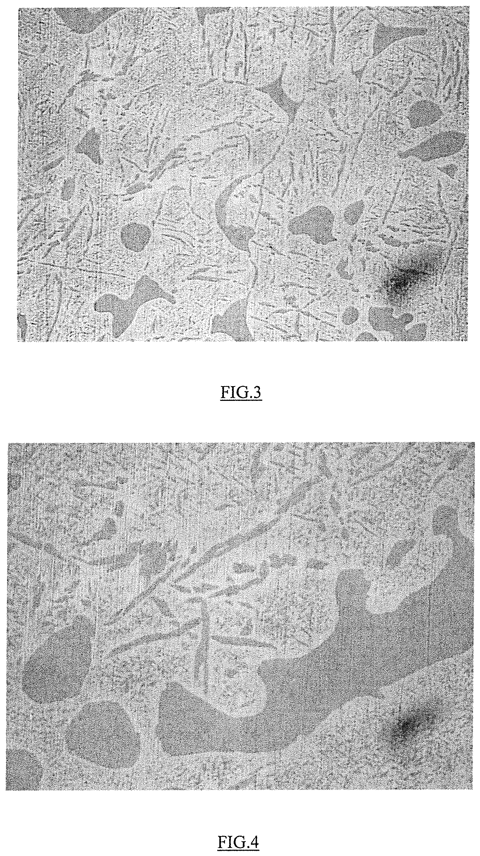

Figs 3 and 4 are micrographs of an alloy according to the invention (magnification 200x and 500x respectively).

The chemical composition (percentage amount by weight) of a metal alloy in accordance with the present invention is the following:
Cu=68.0-73%
Sn<0.10%
Pb<0.10%
Cr<0.10%
Fe=0.500-1.00%
Ni=14.00-16.00%
Al=4.00-5.50%
Mn=0-0.400%
Si=1.00-1.50%
Zn=6.00-7.50%
P<0.05%

Preferably, the chemical composition (percentage amount by weight) of a metal alloy in accordance with the present invention is the following:
Cu=70-71%
Al=4-4.5%
Ni=14.5-15.5%
Zn=6.5-7%
Si=1.2-1.5%
Fe=0.6-0.8%
Pb<0.05%
Sn<0.05%
Cr<0.05%
Mn=0-0.30%
P=0.02%

In the following tables are reported the properties of a conventional alloy (Table 1 - B02 alloy whose composition is indicated in the preamble of this description) and the corresponding properties of an alloy according to the invention (Table 2).

**TABLE 1 - B02 alloy**

| Tensile strength Rm N/mm² | tensile yield strength Rp 0.2 N/mm² | elongation at break A% | Brinell hardness HB |
|---|---|---|---|
| **600/750** | **250/300** | **3/8** | **190/210** |

| thermal expansion coefficient 10⁻⁶K | thermal diffusivity mm²/s | thermal conductivity W/(mK) | |
|---|---|---|---|
| **at 500°C: 15.31** | **at 500°C: 25** | **at 500°C: 89** | |
| **at 600°C: 16.16** | **at 600°C: 23** | **at 600°C: 85.5** | |

**TABLE 2 - An alloy according to the invention**

| Tensile strength Rm N/mm² | tensile yield strength Rp 0.2 N/mm² | elongation at break A% | Brinell hardness HB |
|---|---|---|---|
| **600/750** | **350/500** | **5/7** | **200/220** |

| thermal expansion coefficient 10⁻⁶K | thermal diffusivity mm²/s | thermal conductivity W/(mK) | |
|---|---|---|---|
| **at 500°C: 15.24** | **at 500°C: 27** | **at 500°C: 101.80** | |
| **at 600°C: 15.72** | **at 600°C: 24.5** | **at 600°C: 96.70** | |

Table 2 shows, in particular, that the Brinel surface hardness (HB) of a metallic alloy according to the invention is comprised between 200 and 220 (standard UNI EN ISO 6506/1, UNI EN ISO 6506/2).

Experimentally, it was noted a negliglible reduction of the hardness of a mold made of a copper alloy according to the invention when the temperature changed from the room temperature to the mold operating temperature (approximately 540°C). In particular, hardness measurements were performed with a mold for the glass industry made with an alloy according to the invention, experiencing, compared with a Brinell hardness HB 210 detected on the mold at the room temperature, a Brinell hardness HB 206 detected after use of the mold (temperature comprised between 500 and 600°C).

Preferably, the Brinell hardness of an alloy according to the present invention is comprised between 205 HB and 210 HB.

The composition of this alloy is such as to produce a granulometric structure capable of ensuring a substantially constant hardness in the range of operating temperatures of the molds for the glass industry and particularly resistant to abrasion. Therefore, the molds for the glass industry produced with a copper alloy according to the invention ensure the retention of the mechanical properties and internal capacity for a longer time than those made with conventional alloys, for which the lesser resistance to abrasion determines a greater removal of material during polishing operations. The present alloy is therefore particularly suitable for the production of molds so-called "finishing" in which the final blowing of containers such as glass bottles and jars is performed.

The table 2 shows, in addition, conductivity and thermal diffusivity values much greater than those of a conventional alloy. This corresponds to a greater heat dissipation capacity, which allows to increase the production speed of the machines provided with molds made with an alloy according to the invention. The greater heat dissipation capability also implies a considerable reduction of the defects found in glass containers, taking account of the fact that the use of molds made using alloys characterized by a reduced heat dissipation capability involves the formation of bubbles in the glass, i.e. the production of defective articles. Comparing the values of the coefficients of thermal expansion, one can observe that the one of an alloy according to the invention is lower, thus ensuring greater dimensional stability of the mold during the production phase, i.e. when the mold is used. The thermo-physical properties of the alloys of tables 1 and 2 have been determined by means of the appliance LFA 457 MicroFlash® NETZSCH working according to standards ASTM E-1461, DIN 30905 and DIN EN 821. The thermal diffusivity measurements were conducted in an argon atmosphere with a flow of about 100 ml/min between 500 °C and 600 °C. The values given in Tables 1 and 2 are mean values concerning three tests executed for each material subjected to test. An alloy according to the invention has optimal anti-corrosive characteristics at the high operating temperatures of the molds for the glass industry. The metallization process (in the repair phase, when the inner profile of the mold is worn out, a metallization process is performed making use of nickel ; and in the process of making the mold the inner profile of the mold is treated in the same way to make it more resistant) is facilitated, because the elements present in the alloy avoid the formation of copper oxides that are a major cause of cracks during the metallization process.

In practice the details of execution may vary in relation to the individual elements described and illustrated, without thereby departing from the scope of the adopted solution and thus remaining within the limits of the protection granted to the present patent.

## Claims

1. Copper alloy consisting of Cu, Ni, Al, Zn, Si, Fe, P, and Mn, especially usable for the manufacture of molds for the production of glass containers, **characterized in that** it has the following chemical composition by weight percentage : Cu = 68.0-73%, Fe = 0.500-1.00%, Ni = 14.00 to 16.00%, Al= 4.00 to 5.50%, Mn = 0-0.400%, Si = 1.00 to 1.50%, Zn = 6.00 to 7.50% , P <0.05% , the copper alloy optionally comprising Sn, Pb and/or Cr with Sn<0.10%, Pb<0.10%, Cr<0.10%.

2. Copper alloy according to claim 1, **characterized in that** it has the following chemical composition by weight percentage Cu = 70-71%, Fe = 0.6-0.8%, Ni = 14.5-15.5%, Al = 4-4.5%, Mn = 0-0.30%, Si = 1.2-1.5%, Zn = 6.5-7%, P = 0.02%.

3. Copper alloy according to one or more of the preceding claims, it **characterized in that** it has the following Brinell hardness: HB 200-220, preferably 205-215 HB, measured according to standard UNI EN ISO 6506/1 and UNI EN ISO 6506/72.

4. Copper alloy according to one or more of the preceding claims **characterized by** the following values of thermal diffusivity: 27 mm²/s at 500°C and 24.5 mm²/s at 600°C, measured as shown in the description.

5. Copper alloy according to one or more of the preceding claims **characterized by** the following values of thermal conductivity, measured as shown in the description: 101.80 W/mK at 500°C and 96.70 W/mK at 600°C.

## Patentansprüche

1. Kupferlegierung, die aus Cu, Ni, Al, Zn, Si, Fe, P und Mn besteht, die insbesondere zur Herstellung von Formen für die Produktion von Glasbehältern verwendet werden kann, **dadurch gekennzeichnet, dass** sie die folgende chemische Zusammensetzung in Gewichtsprozent aufweist: Cu = 68,0-73 %, Fe = 0,500-1,00 %, Ni = 14,00 bis 16,00 %, Al = 4,00 bis 5,50 %, Mn = 0-0,400 %, Si = 1,00 bis 1,50 %, Zn = 6,00 bis 7,50 %, P <0,05 %, wobei die Kupferlegierung gegebenenfalls Sn, Pb und/oder Cr umfasst, wobei Sn <0,10 %, Pb <0,10 %, Cr <0,10 %.

2. Kupferlegierung nach Anspruch 1, **dadurch gekennzeichnet, dass** sie die folgende chemische Zusammensetzung in Gewichtsprozent aufweist
Cu = 70-71 %, Fe = 0,6-0,8 %, Ni = 14,5-15,5 %, Al = 4-4,5 %, Mn = 0-0,30 %, Si = 1,2-1,5 %, Zn = 6,5-7 %, P = 0,02 %.

3. Kupferlegierung nach einem oder mehreren der vorstehenden Ansprüche, **dadurch gekennzeichnet, dass** sie die folgende Brinellhärte aufweist: HB 200-220, vorzugsweise 205-215 HB, gemessen nach Norm UNI EN ISO 6506/1 und UNI EN ISO 6506/72.

4. Kupferlegierung nach einem oder mehreren der vorstehenden Ansprüche, die durch die folgenden Wärmediffusivitätswerte gekennzeichnet ist: 27 mm²/s bei 500 °C und 24,5 mm²/s bei 600 °C, gemessen wie in der Beschreibung gezeigt.

5. Kupferlegierung nach einem oder mehreren der vorstehenden Ansprüche, die durch die folgenden Wärmeleitfähigkeitswerte gekennzeichnet ist, gemessen wie in der Beschreibung gezeigt: 101,80 W/mK bei 500 °C und 96,70 W/mK bei 600 °C.

## Revendications

1. Alliage de cuivre consistant en Cu, Ni, Al, Zn, Si, Fe, P, et Mn, qui peut être utilisé en particulier pour la fabrication de moules destinés à produire des contenants en verre, **caractérisé en ce qu'**il a la composition chimique suivante en pourcentage en poids : Cu = 68,0-73 %, Fe = 0,500- 1,00 %, Ni = 14,00 à 16,00 %, Al = 4,00 à 5,50 %, Mn = 0-0,400 %, Si = 1,00 à 1,50 %, Zn = 6,00 à 7,50 %, P < 0,05 %, l'alliage de cuivre comprenant facultativement du Sn, Pb et/ou Cr avec Sn < 0,10 %, Pb < 0,10 %, Cr < 0,10 %.

2. Alliage de cuivre selon la revendication 1, **caractérisé en ce qu'**il a la composition chimique suivante en pourcentage en poids : Cu = 70-71 %, Fe = 0,6-0,8 %, Ni = 14,5-15,5 %, Al = 4-4,5 %, Mn = 0-0,30 %, Si = 1,2-1,5 %, Zn = 6,5-7 %, P = 0,02 %.

3. Alliage de cuivre selon une ou plusieurs des revendications précédentes, **caractérisé en ce qu'**il présente la dureté Brinell suivante: 200-220 HB, de préférence 205-215 HB, mesurée selon la norme UNI EN ISO 6506/1 et UNI EN ISO 6506/72.

4. Alliage de cuivre selon une ou plusieurs des revendications précédentes **caractérisé par** les valeurs de diffusivité thermique suivantes : 27 mm²/s à 500°C et 24,5 mm²/s à 600°C, mesurées tel que présenté dans la description.

5. Alliage de cuivre selon une ou plusieurs des revendications précédentes **caractérisé par** les valeurs de conductivité thermique suivantes, mesurées tel que présenté dans la description : 101,80 W/mK à 500°C et 96,70 W/mK à 600°C.
